(19) Europäisches Patentamt
European Patent Office
Office européen des brevets

(11) **EP 4 389 806 A1**

(12) **EUROPEAN PATENT APPLICATION**

(43) Date of publication:
**26.06.2024 Bulletin 2024/26**

(21) Application number: **22383256.9**

(22) Date of filing: **22.12.2022**

(51) International Patent Classification (IPC):
**C08J 7/04** (2020.01)      **C08J 7/043** (2020.01)
**C08K 3/22** (2006.01)      **C09D 163/00** (2006.01)
**C09D 167/00** (2006.01)      **C08J 5/24** (2006.01)

(52) Cooperative Patent Classification (CPC):
**C08J 7/04; C08J 5/24; C08J 7/043; C08K 3/22; C09D 1/00; C09D 163/00; C09D 167/00;**
C08J 2300/24; C08J 2367/02

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Liderkit SL**
**23210 Guarroman (Jaén) (ES)**
• **Centro de Investigaciones Energéticas, Medioambientales y Tecnológicas O.A., M.P. (CIEMAT)**
**28040 Madrid (ES)**

(72) Inventors:
• **SUAREZ GIL, Silvia**
**MADRID (ES)**

• **MATEOS MUÑOZ, Maria Jose**
**MADRID (ES)**
• **ALCACERA GIL, Maria Paz**
**MADRID (ES)**
• **LAO ZEA, Angela**
**MADRID (ES)**
• **SORIA GUERRERO, Manuel**
**GUARROMAN (ES)**
• **VALENZUELA, Juan Jose**
**GUARROMAN (ES)**

(74) Representative: **Aguilar Catalán, Blanca**
**Calle Madre Rafols 2, Planta 4**
**Oficina 8**
**Edificio Aida**
**50004 Zaragoza (ES)**

(54) **A METHOD FOR IMPLEMENTING SURFACE FUNCTIONALITIES IN POLYMER COMPLEX COMPOSITES AND THE PRODUCT OBTAINED BY THE METHOD**

(57)   This presentation seeks to provide a method for producing polymeric matrix composites with high-performance functional surface coating by using biaxially-oriented polymer films as mould substrate. This method provides a lasting coating with a high functional surface activity. This presentation directly affects any surface functionalities induced by chemical active compounds (such as photocatalysis, self-cleaning, antimicrobial, UV light protection, wear and/or scratch resistance, chemical resistance, anti-statics, anti-fogging, among others), suitable in any industry (construction, transport, energy).

Fig.1

**EP 4 389 806 A1**

# EP 4 389 806 A1

**Description**

## TECHNICAL FIELD

This invention concerns biaxially-oriented polymer films used in surface coating for fibre-reinforced polymer composites. More specifically, this invention presents a new method to give surface functionalities to fibre-reinforced polymer composites, using biaxially-oriented polymer films as gel-coating substrate to withstand the application of several layers of different polymers and fabrics.

## BACKGROUND ART

Many natural materials such as bone and wood are composites. Typically, composite materials consist of a strong and stiff reinforcing component dispersed as particles or fibres in a continuous resin component that transmits loads to the reinforcing phase. Composite materials often offer appealing mechanical characteristics, and they are used in almost all aspects of modern life. Although the resin forming a composite can be metallic or ceramic, this presentation will focus on polymer matrix composites.

Polymers are usually filled by being blended with solid particles such as minerals or glass. These filler materials can be beneficial to the materials in terms of improved processing, cost reduction, density control, improvements in optical and thermal properties, thermal expansion control, flame retardancy, improvements in magnetic and electrical characteristics, in addition to improved mechanical properties, such as fatigue resistance, wear resistance and hardness. Filled polymers are not usually considered to be composite materials, despite the fact that they contain two or more constituents. Polymeric matrix composite (PMC), also called Fibre Reinforced Composite, is a multi-phase material in which reinforcing fillers are integrated with a polymer matrix, resulting in synergistic mechanical properties that cannot be achieved from either component alone. PMC materials are commonly reinforced with fibres, either continuous long fibres or short cut fibres. These fibres can be natural fabrics such as cotton, cellulose or hemp, but also synthetics such as fibreglass or carbon and aramid fibres.

There are various processes used to manufacture PMC with respect to types of reinforcement, matrix system, application, cost of manufacturing, quality of product and production rate: hand lay-up, filament winding and resin infusion, matched-die moulding, VARI moulding, resin transfer moulding or pultrusion. Many composite applications require a gel-coated surface for cosmetic, durability and other functional reasons. Gelcoat refers to a mixture of thermoset resin (like epoxy or polyester resin) with hardener when the material is immediately applied on the composite, or on a mould surface with a brush, or spray, to be the first external part before laminating process take place. The mixture should be applied on a mould as fast as possible because generally the mixture may solidify. The gelcoat can be applied directly to formed PMC (as a paint layer) with brush, roller or spray, but the most common method of gelcoat preparation is to paint or spray the mould tool and allow the coating to gel before laminating on the tacky surface. A layer of gelcoat is then sprayed on to the mould to form the outermost surface of the products. The gelcoat is allowed to cure for several hours, thus it remains tacky and subsequently resin layers adhere better. Alternate layers of catalysed polyester resin and reinforcement material are then applied. Each reinforcement layer is wetted out with resin and then rolled out to displace air pockets. The process continues until the desired thickness is achieved. The composite is then allowed to cure for about 24 hours and, finally, removed from the mould. Currently, functional coatings tend to be introduced on composite surfaces for photocatalysis, biocidal, self-cleaning, UV protection or air cleaning functionalities. Once the PMC is produced as described above, these functional surface coatings are applied over the PMC surface with a brush, or sprayed, or use an industrial system such as dip coating. Dip coating, also known as impregnation or saturation, is a simple, low-cost, reliable and reproducible method of creating a thin and uniform coating on flat or cylindrical substrates. It involves the deposition of a wet liquid film by immersion of the substrate into a solution, normally of a low viscosity, to enable the coating to run back into the bath as the substrate emerges. However, all these systems have several drawbacks. First, if the functional coating is painted on the PMC surface, the coating layer would be easily removed by environment phenomena, passage of time or mechanical strain. However, if functional coating is applied while the gelcoat is still fresh (not completely cured), in order to improve adherence, the functional active compound would migrate into the gelcoat and it would be embedded in the resin. Thus, the functional coating would lose most of its surface performances.

Therefore, a method able to coat the polymeric matrix composites, lasting over time and with active compounds fixed on the surface, would provide a solution for the PMC functional coating industry.

## SUMMARY OF INVENTION

Throughout the description and claims the word "comprise" and variations of the word, are not intended to exclude other technical features, additives, components, or steps.

Furthermore, the word "comprise" encompasses the case of "consisting of". Additional objects, advantages and features of the invention will become apparent to those skilled in the art upon examination of the description or may be learned by practice of the invention. The following examples and drawings are provided by way of illustration, and they are not intended to be limiting of the present invention. Furthermore, the present invention covers all possible combinations of particular and preferred embodiments described herein. Accordingly, this presentation seeks to provide a method for producing polymeric matrix composites with high-performance functional surface coating by using biaxially-oriented polymer films as mould substrate. This method provides a last coating with high functional surface activity.

Biaxially-oriented polymer films (BoPF) are plastic films, or sheet, stretched in such a way that the polymeric chains are oriented parallel to the plane of the film. BoPF exhibit exceptional clarity, very high tensile properties, improved flexibility and toughness, improved barrier properties, and can be made shrinkable relatively easily. BoPF can be made of polyethylene terephthalate (BoPET), polypropylene (BoPP), polyethylene (BoPE), or any other polymer plastic such as polylactic acid (BoPLA) for instance.

The main feature of this presentation is that functional coating is not applied over finished PMC, but it is integrated in PMC production, using BoPF as an initial substrate.

First, the BoPF sheet should be placed, stretched and fixed over a flat surface in order to prevent any wrinkles or surface irregularities. Then, the BOPF is cleaned with water (which can contain soap, detergents, emulsifier, surfactant or any other cleaner substance) for the purpose of removing any particles or dust. Otherwise, these solids would be present on the PMC surface leading to undesired finished.

After cleaning, the first step of the method relates to the impregnation of functional coating in BoPF. This procedure can be done by way of several techniques. The use of a brush and/or roller, or drop casting are the traditional methods used and are feasible for large surfaces. The amount of functional coating is weighted according to the dimensions of the substrate. After that, the pores and strands of the brush and/or roller must be saturated with functional coating solution, in order to avoid the absorption of the previous weighted amount. Finally, the weighted amount of functional coating is discharged and spread evenly over the BoPF surface. Additionally, the weighted functional coating solution can be sprayed with a nozzle or spray gun in a smooth and uniform layer over the BoPF. Furthermore, the coating layer can be deposited by dip coating, the process described above: the BoPF is immersed into the functional coating solution and then lifted vertically from the solution with a certain velocity. In all cases, this first functional coating layer is allowed to cure to evaporate solvents, and the process can be repeated until the optimum layer thickness is achieved. The curing time between layers varies from 1 to 36 hours. Lastly, once the BoPF substrate is coated with the desired amount of functional solution and layers, it is allowed to cure for between 4 and 170 hours in a dust-free environment.

The second step of the method relates to PMC production from functionally coated BoPF substrate. The PMC outer layer (gelcoat layer) is firstly deposited over the substrate. A weighted amount of resin (polyester, epoxy) is added together with the effective amount of catalyst. Both substances are mixed to get a uniform solution, then the mixture is discharged over the functionally coated BoPF substrate in a smooth and uniform layer. Gelcoat is best applied by spray application with a pressure pot or catalyst injection system. Gelcoat can also be applied either using a standard paint gun with primer nozzle or Preval sprayer. Other methods like a brush and roller can also be used. The gelcoat layer is allowed to cure for 5-60 minutes, depending on room temperature, until a tacky consistency is achieved, which means that the gelcoat is still fresh, but it has acquired an outer slick hard film. At this moment, the first layer of reinforcing fibre, measured and cut according to the substrate size, is placed. The composite resin is then applied over the reinforcing fibre. The amount of resin must be able to soak up all the reinforcing fibre. This process can be repeated as many times as is necessary until a tough final product is achieved.

Once the planned layers of fibre and resin are achieved, the assembly must be cured for at least 24 hours at 15-40°C. The relationship between curing time and temperature is inversely proportional. Finally, the BoPF is carefully peeled from the PMC. The functional coating initially applied over the BoPF has been adhered to the outer gelcoat layer of PMC. The BoPF is then clean and ready to start the process again.

This final product must be cured for at least two days before using. All curing stages described in this method may take a certain amount of time depending on factors such as working temperature, catalyst levels and/or mould shape.

The functional coating must be applied periodically to maintain the initial performance. However, if application is carried out over a fresh gelcoat layer of finished PMC, the functional active compounds migrate into the gelcoat and the efficiency of the functionality decreases. This invention provides a method of introducing long-term active surface functionality with high performance in PMC that overcomes both drawbacks. In this presentation, the functional active compounds supported on BoPF are printed onto the gelcoat and they remain embedded on the surface, in contact with light and air. Therefore, those functional active compounds are not permitted for deeper transition in the gelcoat layer and, consequently, the performance of surface functionality increases. Moreover, as far as the functional active compounds are printed directly on the gelcoat layer, instead of an outer layer over the gelcoat, environment and mechanical factors cannot easily remove them. Thus, the active functionality time is extended.

The main application of this disclosure involves the production of any kind of polymeric matrix composites in any form, such as sheets, boards, shades, beams, slabs, plates and shields. Moreover, the method is not limited to flat surfaces, but can also be applied to three-dimensional open objects. The PMC includes any thermoset, thermoplastic and thermosetting resin in its composition and any kind of reinforcing fibre. As an example, without this list being exhaustive, the resin of PMC can be any polyester, vinyl ester, rubber, polyurethane, polystyrene and/or epoxy resin, whereas the reinforcing fibres can include fibreglass, carbon and aramid fibres; natural fabrics such as wood, straw, cotton, cellulose or hemp; metal or textile, mono or bidirectional, mesh; and/or polymeric fibres such as polypropylene and polyethylene.

On the other hand, the BoPF includes any polymer with a biaxially-oriented structure. As an example, without this list being exhaustive, BoPF can be made of biaxially-oriented polyethylene terephthalate, polypropylene, polyethylene, polylactic acid, polyamide, polyvinyl chloride, polyvinyl alcohol, starch and mixtures thereof.

This presentation directly affects any surface functionalities induced by chemical active compounds (such as photocatalysis, self-cleaning, antibacterial, UV light protection, wear and/or scratch resistance, chemical resistance, anti-statics, anti-fogging), suitable for any industries.

**BRIEF DESCRIPTION OF DRAWINGS**

Equation 1.

Figure 1. Effect of the photocatalytic quantity included in BoPF (Mylar) during the photooxidation of $C_2HCl_3$. Operating conditions: $[C_2HCl_3]$ = 25 ppm, total gas flow: 300 mLmin$^{-1}$.

Figure 2. Formaldehyde removal for printed PMCs prepared by: roller (■) and by dip coating (▨) at different total gas flow.

Figure 3. Self-cleaning properties of photocatalytic printing material, according to the ISO 27488 for elimination of oleic acid: (□) Control under UV-A, (□) P1 dark conditions, (□) P2 dark conditions, (□) P1 UV-A, (□) P2 under UV-A. Standard deviation data is included for each measurement.

Figure 4. Variation of MB concentration over time for (□) control in the dark (□) P2 dark conditions, (□) P2 under UV-A and (□) C-P2 under UV-A. Photo of the colour of the P2 sample before, and after, UV-A 60 min UV-A irradiation.

Table 1 shows the results obtained for control samples (S) in dark conditions and for P2 PMC samples after 4 hours of irradiation with UV-A light 2.0 mW cm$^{-2}$. The viral titres present a mean value $\log_{10}TCID_{50}$ of 6.66.

**DESCRIPTION OF EMBODIMENTS**

The following examples and embodiments are provided by way of illustration, and they are not intended to be limiting for this presentation. In these embodiments, photocatalytic properties were introduced in polyester composite. In this case, the photocatalytic precursor solution was prepared by the synthesis of a $TiO_2$ sol, starting with titanium isopropoxide TIP Ti(OPri)$_4$. The sols were synthesised by adding titanium isopropoxide (TIP) to an aqueous solution of nitric acid at a ratio of 900:6.5:74 ($H_2O:HNO_3:TIP$). The suspension was then stirred until complete peptization. This synthesis route leads to P1 precursor solution.

Different powders based on metal oxides or other adsorbents can be incorporated in P1 sol (i.e. $TiO_2$, $SiO_2$, zeolites, silver salts, $Al_2O_3$, or carbonaceous materials, amongst others). A suspension of these compounds is preferably in the range of between 1 and 10 g L$^{-1}$. The final content should be in the range of between 1 and 5 wt.%. P2 precursor solution, selected for the description of the analytical properties, was obtained by adding 1.0 wt.% of $TiO_2$ to P1 solution. Other titanium precursors for the synthesis of the $TiO_2$ sol, such as titanium tetrabutoxide (TbuTi), can be used.

Then, a 0.8 m$^2$ BoPF (1 m long and 0.8 m wide of Mylar, biaxially-oriented polyethylene terephthalate) was coated with two layers of 10-20 g m$^{-2}$ of the mentioned solutions by brushing, rolling or dip coating. Curing time between layers was 3 hours. After the second layer, the coated BoPF was allowed to cure for 72 hours in a dust-free environment. Hereafter, the composite production of the BoPF began. In this respect, 950 g m$^{-2}$ of gelcoat (Euromere Eurogel GCT 602) was mixed and stirred with 19 g of catalyst (Methyl ethyl ketone peroxide 35%, Promox P211TX) and applied evenly over the coated BoPF by brushing. The gelcoat layer was cured for 15 minutes. After this time, the first layer of fibre (1 m long and 0.8 m wide, glass fibre 300 g m$^{-2}$, icomat 305 EB-300) was laid over the gelcoat layer and the resin and catalyst layer (polyester resin Resichim 222 A LKT M; Methyl ethyl ketone peroxide 35% as catalyst, Promox P211TX, 2% over polyester resin weight) were immediately applied by brushing until all the fibre was soaked up. A second layer of a similar amount of fibre and resin were placed and evenly applied using the same technique. After that, the assembly was allowed to cure for 24 hours at 25°C.

Once the assembly was cured, the BoPF layer was carefully removed. The BoPF sheet looked completely clean. The assembly without BoPF sheet cured for 7 days before use. The surface photocatalytic properties of PMCs, prepared by this invention, were analysed through measurement of photocatalytic degradation of several pollutants.

Photooxidation of organochloride volatile organic compound testing.

Trichloroethylene ($C_2HCl_3$), an organochloride volatile organic compound, typically used as solvent, was selected. Experiments were performed in a one single pass continuous flow gas reactor, with UV-A light of 6.0 mW cm$^{-2}$ (as it is described in S. Suárez, J.M. Coronado, R. Portela, J.C. Martin, M. Yates, P. Ávila, B. Sánchez, On the preparation of TiO2-sepiolite hybrid materials for the photocatalytic degradation of TCE: influence of TiO2 distribution in the mineralization., Environ. Sci. Technol., 42 (2008) 5892-5896). Samples of 8.0 cm (length) $\times$ 3.0 cm (width) $\times$ 0.2 cm (thickness) were placed in the reactor. The pollutant concentration was set to 25 ppm and the total gas flow was 300 mL min$^{-1}$. The variation of the pollutant concentration at reactor inlet and outlet was measured using a FTIR spectrometer with a gas cell. The trichloroethylene removal capability was calculated according to equation 1.

$$X_{C2HCl3} = [C_2HCl_3]_{inlet} - ([C_2HCl_3]_{outlet} / [C_2HCl_3]_{inlet}) \qquad \text{(Eq. 1)}$$

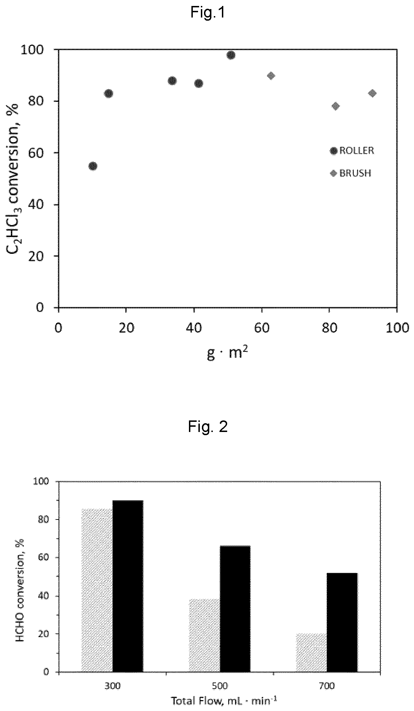

The results are shown in Figure 1, where the trichloroethylene conversion with the photocatalyst amount per square metre incorporated into the BoPM are corroborated. The results indicated that photocatalyst amounts above 15 g m$^{-2}$ achieved trichloroethylene efficiency of over 80%. Moreover, photocatalytic material can be applied indistinctly using simple and economic techniques (i.e. by using a roller or a brush). In general, higher photoactive material amounts were incorporated by using a brush. The use of a roller allows more precise control of the functional material.

Figure 1.

Therefore, the surface functionalities of PMC prepared by this presentation allow for the photooxidation of trichloroethylene and, consequently, the potential elimination of this pollutant from the gas phase. The incorporation of functionality by this invention ensures the chemical interaction with the gelcoat, with the active compounds remaining outside of the material. Moreover, this invention did not modify the external appearance of the polymeric material, showing the PMC as a homogeneous and white surface.

Photooxidation of formaldehyde testing.

Additionally, the efficiency of PMC prepared by way of this invention was evaluated for formaldehyde (HCHO) photooxidation reaction, a characteristic compound present in indoor air. Thus, a 0.8 m$^2$ BoPF (1 m long and 0.8 m wide of Mylar, biaxially-oriented polyethylene terephthalate) was coated with two layers of 10 g m$^{-2}$ of the mentioned P2 solution by brushing. Curing time between layers was 3 hours. After the second layer, the coated BoPF was allowed to cure for 72 hours in a dust-free environment. Another identical piece of BoPF was coated by way of dip coating.
Hereafter, the PMC production process over both BoPF was the same as the one described above. The formaldehyde photooxidation reaction with total gas flow in the range of 300-700 mL/min with formaldehyde concentration of 30 ppm was studied. Figure 2 shows the efficiency of the materials printed with P2 precursor incorporated by way of brushing and the dip coating technique.

Figure 2.

The oxidation of formaldehyde took place in all cases, although low flows achieved better degradation results (above 80% conversion). In any case, the results meant that both techniques (roller and dip coating) were suitable for use in this invention in order to apply the active solution to BoPF.

Self-cleaning properties testing.

The self-cleaning ability of printed PMCs was analysed according to the conditions reported in standard ISO 27488: 2009. This standard uses oleic acid as the organic compound to be photo-oxidised under UV-A irradiation (ISO 27448:2009, - Test method for self-cleaning performance of semiconducting photocatalytic materials - Measurement of water contact angle, 2009; A. Mills, C. Hill, P. K. J. Robertson Overview of the current ISO tests for photocatalytic materials J. Photochem. Photobiol. A: Chemistry 237 (2012) 7- 23). According to the standard, a solution of oleic acid in n-Heptane was prepared. Oleic acid was incorporated into the PMC with, and without, the photocatalytic functionality by dip coating as reported in the standard. The variation of the water contact angle (WCA) over time was evaluated by a Krüss Easy Drop device. Samples were evaluated under dark and UV-A irradiation conditions. The properties of the control material (PMC without photocatalytic functionality) under UV-A irradiation, the PMC with photocatalytic material (P1 and P2) in dark conditions, and the PMC with both photocatalytic materials under UV-A irradiation, were tested.

Thus, a 0.8 $m^2$ BoPF (1 m long and 0.8 m wide of Mylar, biaxially-oriented polyethylene terephthalate) was coated with two layers of 10 g $m^{-2}$ of the aforementioned P1 solution by brushing. Curing time between layers was 3 hours. After the second layer, the coated BoPF was allowed to cure for 72 hours in a dust-free environment. Another identical piece of BoPF was coated with P2 solution.

Hereafter, the PMC production process over both BoPFs was the same as the one described above. Another PMC without surface functionality was prepared.

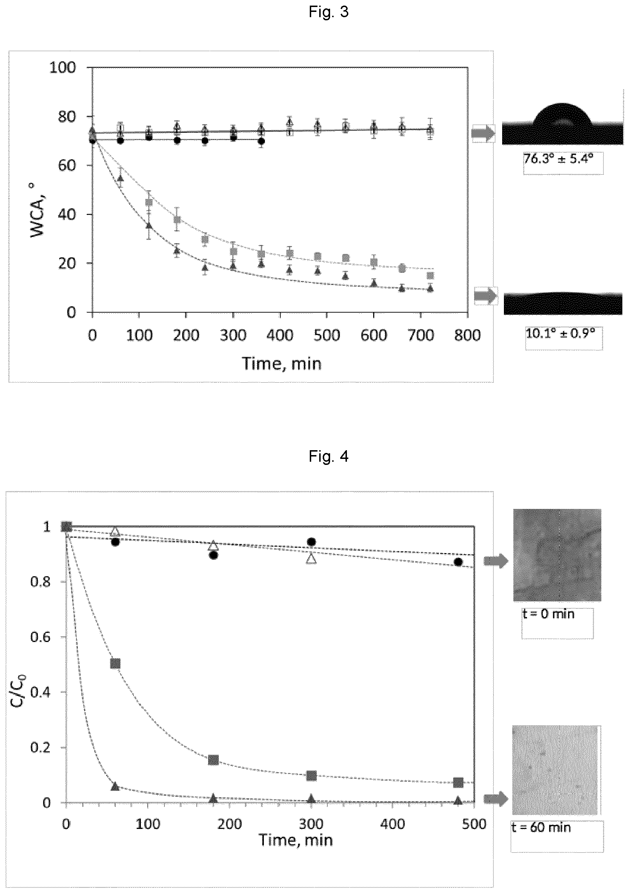

The results (Figure 3) showed correlation with the arithmetic mean values of ten measurements with their standard deviation. WCA of the control PMC presented an initial value around 76.3° $\pm$ 5.4°. Similar values were obtained for control PMC under UV-A irradiation conditions for 300 min. Then, no appreciable modification of WCA with time for non-additive PMC was observed. The PMC materials treated by this invention showed initial values around 75.5° $\pm$ 2.1°. No significant differences of the WAC for both P1 and P2 PMC were observed under dark conditions. Nevertheless, an exponential drop of WCA over time for PMC, treated by way of this invention, under UV-A was assessed. Thus, WCA values decreased to 10.1° $\pm$ 0.9°, after 700 min of sample irradiation, indicating the self-cleaning ability of the PMCs treated by way of this invention.

Figure 3.

Self-cleaning testing of dyes.

The self-cleaning properties of PMC produced by this presentation were also tested for dye photooxidation. Methylene blue (MB) is a dye extensively used for the analysis of self-cleaning properties (M. Minella, C. Minero, Materials 12-508 (2019) 1-15). Thus, 7.5 mM MB solution was prepared and spread over pristine PMC materials and over PMC with surface functionality obtained by this invention with P2 solution. Samples of $4.0 \times 3.0$ $cm^2$ of PMC, obtained as it was described above, were prepared and irradiated with UV-A lamps, irradiance 8.2 mW $cm^{-2}$. The variation of MB concentration on the samples was evaluated by a DRS spectroscopy using a UV-Vis PerkinElmer Lambda 650 S spectrometer.

Figure 4 shows the variation over time of MB concentration for samples under dark and UV-A irradiation conditions. In this figure, the results of the P2 PMC sample were compared with a PMC obtained by conventional coating with the photoactive material (C-P2). The conventional PMC was prepared as described above, with no BoPF application. Then, the surface functionality was applied by dip coating once the PMC was finished. In both samples, the amount of photoactive material was set to 20-30 g $m^{-2}$.

Once again, the results showed practically no change in MB concentration over time for polymeric and photoactive materials under dark conditions. An exponential drop of MB concentration over time for photoactive materials was observed. This drop was more pronounced for PMCs made by way of this invention compared with those prepared by way of the conventional technique. The surface colour of samples before, and after 60 min irradiation time, is also shown in Figure 4 (right). The results demonstrate the self-cleaning ability of this invention for printed PMC using different target molecules and under different conditions.

Figure 4.

Antiviral surface functionality testing.

The antiviral functionality applied in PMC by this invention was analysed according to the conditions reported in standards ISO 21702:2019 (ISO 21702:2019 Measurement of antiviral activity on plastics and other non-porous surfaces) and ISO18061:2014 (ISO 18061:2014 Fine Ceramics (Advanced Ceramics, Advanced Technical Ceramics) - Determination of antiviral activity of semiconducting photocatalytic materials - Test method using bacteriophage Q-beta). The first standard deals with the assessment of antiviral activity on plastics and other non-porous surfaces and the second standard reports on the assessment of photocatalytic materials for antiviral activity. *Vaccinia* (VACV ATCC VR-1508), an enveloped virus belonging to the poxvirus family, was selected for these analyses. Six samples of PMC with surface functionality ($3.0 \times 3.0$ $cm^2$) were prepared with P2 solution using the method described above. Nine reference samples (without any photoactive surface functionality) were also produced.

The number of infectious virus particles was quantified by using the Median Tissue Culture Infectious Dose ($TCID_{50}$) assay. The assay works by adding a serial dilution of the virus sample to cells in a 96-well plate. The cell to show a cytopathic effect (CPE: i.e. morphological changes upon infection with the virus or cell death) was BHK-21 (C-13 ATCC CCL-10). After an incubation period (48 h), the cells are inspected for CPE or cell death. Then, each cell is classified as infected or not infected. The dilution, at which 50% of the cells show a CPE, is used to calculate the $TCID_{50}$ of the virus sample. This calculation was done by way of a Spearman-Karber mathematical approach. Virus titre is expressed as $TCID_{50}$.

As described in standard ISO 21702:2019, biocidal antiviral activity is calculated according to Eq. 2:

$$R = (U_t - U_0) - (A_t - U_0) = U_t - A_t \qquad \text{(Eq. 2)}$$

And the reduction percentage is calculated according to Eq. 3:

$$\% \text{ Reduction} = (1 - 10^{-R}) \times 100 \qquad \text{(Eq. 3)}$$

Where:

R: Biocidal antiviral activity
Uo: average of the infectivity titre of the solutions recovered from the 3 test pieces without additive at time 0.
Ut: average of the infectivity titre of the solutions recovered from the 3 test pieces without additives exposed to ultraviolet light.
$A_t$: average effective titre of solutions recovered from the 3 treated test pieces exposed to ultraviolet light

Table 1 shows the antiviral results of P2 samples under UV-A irradiation conditions inoculating *Vaccinia* virus, where:

S: Substrate, control sample in dark conditions.
Cu: control sample, polymeric material without the photocatalytic functionality under UV-A. Mean values of three test pieces.
Pu: BioPM sample with photocatalytic functionality under UV-A.

Table 1.

The analysed sample subjected to UV-A for 4 hours presents antiviral activity (R) of 2.60 with a reduction percentage of 99.7% for *Vaccinia Virus,* compared to the pieces tested without treatment, based on ISO 21702:2019 and ISO 18061:2014 standards. Hence, this invention provides antiviral activity to the surface PMC.

**Claims**

1. A method for implementing surface functionalities in polymer complex composites comprising the use of biaxially-oriented polymer films integrated in composite production by means of the following steps:

a) the incorporation of biaxially-oriented polymer film with the functional coating solution following by appropriate curing time,
b) the incorporation of the functional coating by brush, rolling, dip coating, drop-casting or other techniques to allow a good spread of the chemical functionally,
c) the application of metal oxide precursors with the desired functionality by synthesis of a sol, suspension in aqueous media or colloidal suspensions,
d) the application of a gelcoat layer over the functional coated biaxially-oriented polymer film face following by appropriate curing time,
e) the application of resin and reinforcing fibre layers over the gelcoat layer followed by appropriate curing time,
f) the curing of the assembly, and
g) the removal of the biaxially-oriented polymer film from the assembly to print a functional layer with photocatalytic, self-cleaning, antimicrobial properties, amongst others.

2. The method according to claim 1 wherein the resin used in the composite is thermosetting resin.

3. The method according to claim 1 wherein the resins used in the composite are polyester, vinyl ester, rubber, polyurethane, polystyrene, epoxy resin, and combinations thereof.

4. The method according to claims 1-3 wherein the reinforcing fibres used in the composite are fibreglass, rock wool, carbon fibre, aramid fibre, plant fibre, wood, straw, cotton, cellulose, hemp, metal mesh, textile mesh, ceramics, concrete, polypropylene, polyethylene, polyvinyl alcohol and combinations thereof.

5. The method according to claims 1-4 wherein the biaxially-oriented polymer films are polyethylene terephthalate, polypropylene, polyethylene, polylactic acid, polyamide, polyvinyl chloride, polyvinyl alcohol, polycarbonate, starch and combinations thereof.

6. The method according to claims 1-5 wherein the surface functionalities are photocatalysis, self-cleaning, antibacterial, antifungal, UV light protection, wear resistance, scratch resistance, chemical resistance, anti-fogging and combinations thereof.

7. A fibre reinforced polymeric composite, featuring surface functionalities, produced according to claim 1.

8. The fibre reinforced polymeric composite according to claim 7 wherein the resins used in the composite are polyester, vinyl ester, rubber, polyurethane, polystyrene, epoxy resin, and combinations thereof.

9. The fibre reinforced polymeric composite according to claim 7-8 wherein the reinforcing fibres used in the composite are fibreglass, rock wool, carbon fibre, aramid fibre, plant fibre, wood, straw, cotton, cellulose, hemp, metal mesh, textile mesh, ceramics, concrete, polypropylene, polyethylene, polyvinyl alcohol and combinations thereof.

10. The fibre reinforced polymeric composite according to claim 7-9 wherein the surface functionalities are photocatalysis, self-cleaning, antimicrobial, antifungal, UV light protection, wear resistance, scratch resistance, chemical resistance, anti-fogging and combinations thereof.

Fig.1

Fig. 2

Fig. 3

Fig. 4

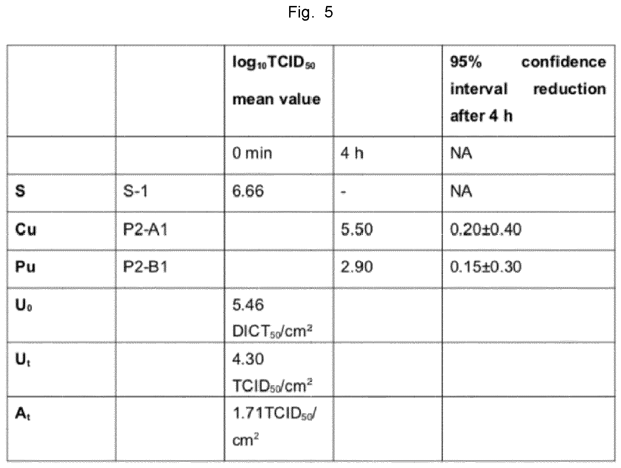

Fig. 5

| | | $\log_{10}TCID_{50}$ mean value | | 95% confidence interval reduction after 4 h |
|---|---|---|---|---|
| | | 0 min | 4 h | NA |
| S | S-1 | 6.66 | - | NA |
| Cu | P2-A1 | | 5.50 | 0.20±0.40 |
| Pu | P2-B1 | | 2.90 | 0.15±0.30 |
| $U_0$ | | 5.46 $DICT_{50}/cm^2$ | | |
| $U_t$ | | 4.30 $TCID_{50}/cm^2$ | | |
| $A_t$ | | $1.71 TCID_{50}/cm^2$ | | |

Europäisches
Patentamt

European
Patent Office

Office européen
des brevets

# EUROPEAN SEARCH REPORT

Application Number

EP 22 38 3256

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DATABASE WPI<br>Week 201025<br>8 April 2010 (2010-04-08)<br>Thomson Scientific, London, GB;<br>AN 2010-D90753<br>XP002809434,<br>& JP 2010 076277 A (TORAY IND INC)<br>8 April 2010 (2010-04-08)<br>* abstract; claims; figures 1-4; example Example *<br>& JP 2010 076277 A (TORAY INDUSTRIES)<br>8 April 2010 (2010-04-08)<br>----- | 1-10 | INV.<br>C08J7/04<br>C08J7/043<br>C08K3/22<br>C09D163/00<br>C09D167/00<br>C08J5/24 |
| A | EP 1 417 158 A2 (PPG IND OHIO INC [US])<br>12 May 2004 (2004-05-12)<br>* claims *<br>----- | 1-10 | |

TECHNICAL FIELDS
SEARCHED     (IPC)

C08J
C09J
C08K
C09D

The present search report has been drawn up for all claims

| Place of search | Date of completion of the search | Examiner |
|---|---|---|
| Munich | 5 June 2023 | Fodor, Csaba |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 38 3256

This annex lists the patent family members relating to the patent documents cited in the above-mentioned European search report.
The members are as contained in the European Patent Office EDP file on
The European Patent Office is in no way liable for these particulars which are merely given for the purpose of information.

05-06-2023

| Patent document cited in search report | | Publication date | Patent family member(s) | | Publication date |
|---|---|---|---|---|---|
| JP 2010076277 | A | 08-04-2010 | JP | 5115428 B2 | 09-01-2013 |
| | | | JP | 2010076277 A | 08-04-2010 |
| EP 1417158 | A2 | 12-05-2004 | AT | 361901 T | 15-06-2007 |
| | | | AU | 2002320488 B2 | 24-11-2005 |
| | | | CA | 2452723 A1 | 30-01-2003 |
| | | | CN | 1596229 A | 16-03-2005 |
| | | | DE | 60220066 T2 | 10-01-2008 |
| | | | EP | 1417158 A2 | 12-05-2004 |
| | | | ES | 2286264 T3 | 01-12-2007 |
| | | | JP | 2004535922 A | 02-12-2004 |
| | | | KR | 20040024582 A | 20-03-2004 |
| | | | NZ | 530479 A | 31-03-2006 |
| | | | TR | 200400058 T2 | 21-09-2004 |
| | | | US | 2003039843 A1 | 27-02-2003 |
| | | | WO | 03009061 A2 | 30-01-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. SUÁREZ ; J.M. CORONADO ; R. PORTELA ; J.C. MARTIN ; M. YATES ; P. ÁVILA ; B. SÁNCHEZ.** On the preparation of TiO2-sepiolite hybrid materials for the photocatalytic degradation of TCE: influence of TiO2 distribution in the mineralization. *Environ. Sci. Technol.,* 2008, vol. 42, 5892-5896

- *Test method for self-cleaning performance of semiconducting photocatalytic materials - Measurement of water contact angle,* 2009
- **A. MILLS ; C. HILL ; P. K. J. ROBERTSON.** Overview of the current ISO tests for photocatalytic materials J. *Photochem. Photobiol. A: Chemistry,* 2012, vol. 237, 7-23
- **M. MINELLA ; C. MINERO.** *Materials,* 2019, vol. 12-508, 1-15